## Europäisches Patentamt

## European Patent Office

## Office européen des brevets

(19)

(11) Veröffentlichungsnummer : **0 344 439 B1**

(12) **EUROPÄISCHE PATENTSCHRIFT**

(45) Veröffentlichungstag der Patentschrift :
**26.02.92 Patentblatt 92/09**

(51) Int. Cl.⁵ : **G01L 1/20**, G01L 1/22,
G01L 9/00

(21) Anmeldenummer : **89106982.5**

(22) Anmeldetag : **19.04.89**

(54) **Sensor.**

(30) Priorität : **28.05.88 DE 3818190**

(43) Veröffentlichungstag der Anmeldung :
**06.12.89 Patentblatt 89/49**

(45) Bekanntmachung des Hinweises auf die
Patenterteilung :
**26.02.92 Patentblatt 92/09**

(84) Benannte Vertragsstaaten :
**CH DE ES FR GB IT LI SE**

(56) Entgegenhaltungen :
**EP-A- 0 148 321
DE-A- 3 439 210
US-A- 3 724 274
PATENT ABSTRACTS OF JAPAN, Band 8, Nr.
133 (P-281)(1570), 20. Juni 1984; & JP-A-59 035
121**

(73) Patentinhaber : **ROBERT BOSCH GmbH
Postfach 30 02 20
W-7000 Stuttgart 30 (DE)**

(72) Erfinder : **Schmid, Kurt
Schlossstrasse 55
W-7257 Ditzingen 4 (DE)**
Erfinder : **Heinz, Rudolf, Dr. Dipl.-Ing.
Eltinger Weg 26
W-7253 Renningen (DE)**
Erfinder : **Schoor, Ulrich
Tuchbleiche 5
W-7000 Stuttgart 40 (DE)**
Erfinder : **Wendel, Jürgen
Germserheimer Strasse 14
W-7000 Stuttgart 31 (DE)**

**Beschreibung**

Die Erfindung geht aus von einem Sensor nach der Gattung des Anspruchs 1 und 3 Bei derartigen, z. B. aus der EP-A-0 148 321 bekannten Sensoren ist ein Dickschichtwiderstand auf einem keramischen Träger aufgedruckt. Die Ableitleitungen für die Meßsignale werden durch den keramischen Träger geführt und werden direkt and der Unterseite des Dickschichtwiderstands mit diesen kontaktiert. Bei thermischen Schwankungen können sich aber der Träger und die Ableitungen unterschiedlich ausdehnen. Dadurch können sich im Bereich der Kontaktierung der Ableitungen Störbereiche bilden, die das Meßsignal stören und verfälschen können. Ferner liegen diese Kontaktierungsstellen im Bereich der Krafteinleitung auf dem Dickschichtwiderstand, wodurch keine gleichmäßige Lastverteilung über den gesamten Dickschichtwiderstand möglich ist.

Würdigung

In der Schrift Patent Abstracts of Japan, Band 8, Nr. 133 (p-281) [1570], 20. Juni 1984 wird ein Druckaufnahmeelement beschrieben, bei dem ein druckempfindliches Element zwischen zwei Elektroden angeordnet ist. Aufgrund der Widerstandsänderung der beiden Elektroden kann der Druck ermittelt werden. Zum Abgriff der Meßsignale werden durch eine mittige Bohrung Anschlußleitungen zu den beiden Elektrodenplatten geführt und an den Innenwänden der Elektrodenscheiben befestigt.

Vorteile der Erfindung

Der erfindungsgemäße Sensor mit den Merkmalen des Anspruchs 1 hat demgegenüber den Vorteil, daß eine gleichmäßige Lastverteilung über den Dickschichtwiderstand während der Messung möglich ist, und somit eine hysteresearme und bereits im Anfangsbereich lineare Kennlinie erreichbar ist. Durch die Verwendung eines Koaxialkabels als Ableitleitung ist ein sehr einfacher Aufbau des Sensors und eine einfache Kontaktierung möglich. Ferner sind die Kontaktierungsstellen zugentlastet. Der Stromdurchgang durch den Dickschichtwiderstand verläuft senkrecht zu diesem und ermöglicht dadurch eine einfache Anschlußtechnik der Ableitdrähte und eine kleine Bauweise.

Durch die in den abhängigensprüchen aufgeführten Maßnahmen sind vorteilhafte Weiterbildungen des im Anspruch 1 und 3 angegebenen Sensors möglich.

Zeichnung

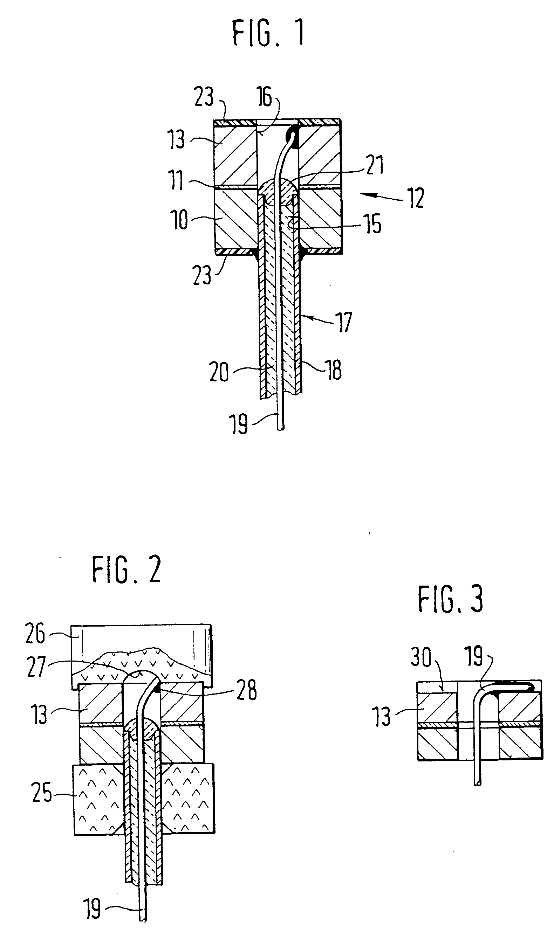

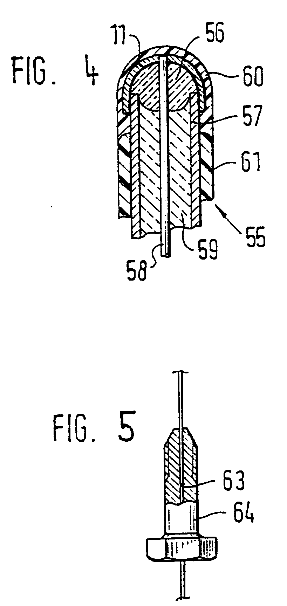

Ausführungbeispiele der Erfindung sind in der Zeichnung dargestellt und in der nachfolgenden Beschreibung näher erläutert. Es zeigen die Figuren 1 bis 3 je einen Schnitt durch eine Abwandlung des Sensors, Figur 4 einen Schnitt durch einen direkt in das zu bestimmende Medium einbringbaren Sensor und Figur 5 eine besondere Vervendungsform des Sensors nach Figur 4.

Beschreibung der Ausführungsbeispiele

In Figur 1 ist mit 10 ein ringförmiger Träger für einen Dickschichtwiderstand 11 eines Sensors 12 bezeichnet, der als Drucksensor oder als Kraftsensor verwendet werden kann. Der Dickschichtwiderstand 11 wird von einem ringförmigen Krafteinleitungsteil 13 abgedeckt. Sowohl der Träger 10 als auch das Krafteinleitungsteil 13 besteht aus elektrisch leitendem Material, z.B. Metall. Der Träger 10 und das Krafteinleitungsteil 13 sind fest mit dem Dickschichtwiderstand 11 verbunden, wodurch eine gleichmäßige Lastverteilung über den gesamten Bereich des Dickschichtwiderstands 11 möglich ist. In den mittigen Bohrungen 15 bzw. 16 des Trägers 10 bzw. des Krafteinleitungsteils 13 ist ein Koaxialkabel 17 angeordnet, das aus einem äußeren Leiter 18 und einem inneren Leiter 19, zwischen denen sich eine Isolationsmasse 20 befindet, besteht. Das Koaxialkabel 17 reicht bis zur Stirnseite des Trägers 10, auf der der Dickschichtwiderstand 11 aufliegt. Am Ende des Koaxialkabels 17 sitzt ein Isolationstropfen 21, z.B. aus Glasschmelze, auf, durch den der innere Leiter 19 geführt ist. Das Koaxialkabel 17 ist mit seinem äußeren Leiter 18 am Träger 10 befestigt. Der innere Leiter 19 ist am Krafteinleitungsteil 13 angelötet. Die dem Dickschichtwiderstand 11 abgewandten Stirnseiten des Krafteinleitungsteils 13 und des Trägers 10 sind je von einer elektrischen Isolierschicht 23 abgedeckt. Da der Träger 10 und das Krafteinleitungsteil 13 aus elektrisch leitendem Material bestehen, wird ein Stromfluß senkrecht zum Dickschichtwiderstand 11 bewirkt. Der Träger 10 und das Krafteinleitungsteil 13 dienen zum Ableiten des Meßsignals zu den Leitern 18, 19 des Koaxialkabels 17. Dadurch ist eine vereinfachte Kontaktierung der Leiter 18, 19 möglich.

Im Ausführungsbeispiel nach Figur 2 ist statt den Isolierschichten 23 an den Stirnseiten je ein keramisches Substrat 25 bzw. 26 angeordnet. Zum leichteren Anlöten des inneren Leiters 19 ist in dem auf dem Krafteinleitungsteil 13 angeordneten Substrat 26 eine mittige, mit den Bohrungen 15, 16 fluchtende Ausnehmung 27 ausgebildet. Mit Hilfe der Lötverbindung 28 ist ein guter elektrischer Kontakt zwischen dem Leiter 19 und dem Krafteinleitungsteil 13 möglich.

Um eine gute und großflächige Überlappung zwischen dem Leiter 19 und dem Krafteinleitungsteil 13 zu erreichen, wie in der Abwandlung nach Figur 3 dargestellt, ist in der Stirnseite des Krafteinleitungsteiles 13 eine Nut 30 ausgebildet, in der der Leiter 19 eingelegt und eingelötet wird. Bei der Herstellung des Sensors 12 wird auf den Träger 10 der Dickschichtwiderstand 11 aufgedruckt. Im noch weichen Zustand des Dickschichtwiderstands 11 wird das Krafteinleitungsteil 13 aufgesetzt und anschließend das Bauteil ausgehärtet. Im ausgehärteten Zustand wird die Mittelbohrung 15, 16 eingebracht.

Alle Ausführungsbeispiele nach den Figuren 1 bis 3 sind für den Einbau in ein Gehäuse vorgesehen. Sie können dann z.B. in eine Sacklochbohrung einer Schraube eingesetzt werden, wobei das Krafteinleitungsteil an den Boden der Schraube von der Innenseite her angedrückt ist. Der Druck des zu bestimmenden Mediums wirkt auf die Außenseite des Bodens der Schraube.

In Figur 4 ist ein Sensor dargestellt, der direkt in das zu messende Medium ragen kann. Hierzu wird ein Koaxialkabel 55 verwendet, auf dessen Ende ein Tropfen 56 aus elektrisch isolierendem Material, z.B. eine Glaseinschmelzung aufgesetzt ist. Auf den Tropfen 56 wird der Dickschichtwiderstand 11 aufgedruckt, so daß er auch über die Seitenflächen ragt und dort mit den äußeren Leitern 57 des Koaxialkabels 55 überlappt. Der innere Leiter 58 des Koaxialkabels 55 ist durch den Tropfen 56 hindurchgeführt und mit dem Dickschichtwiderstand 11 kontaktiert. Zwischen den beiden Leitern 57 und 58 ist im Koaxialkabel 55 eine Isoliermasse 59 eingebracht. Über den Dickschichtwiderstand 11 ist eine Schutzschicht 60, z.B. ein Lack aufgebracht, der bis zur äußeren Isolierung 61 des Koaxialkabels 55 reicht. Mit Hilfe der Schutzschicht 60 ist der Sensor vor Umwelteinflüssen und auch vor einem Angriff des Mediums geschützt.

Der Sensor nach Figur 4 kann, wie in Figur 5 dargestellt, in eine Längsbohrung 63 einer Schraube 64 eingesetzt werden. Die Schraube 64 dient zugleich als Halterung für den Sensor als auch Verschluß für eine Öffnung.

## Patentansprüche

1. Sensor zur Bestimmung des Drucks oder der Kraft mit Hilfe eines auf einem Träger (10) aufgebrachten Dickschichtwiderstands (11), dadurch gekennzeichnet, daß der Träger (10) und mindestens ein auf dem Dickschichtwiderstand anliegendes und die zu bestimmende Kraft bzw. den Druck auf diesen übertragendes Krafteinleitungsteil (13) aus elektrisch leitendem Material bestehen, daß die zum Ableiten des Meßsignals dienenden Ableitleitungen (18, 19) die Leiter eines Koaxialkabels (17) sind, daß der äußere Leiter (18) des Koaxialkabels (17) am Träger (10) angeordnet ist und daß der innere Leiter (19) des Koaxialkabels (17) am Krafteinleitungsteil (13) angeordnet ist.

2. Sensor nach Anspruch 1, dadurch gekennzeichnet, daß der Träger (10) und das Krafteinleitungsteil (13) von einer elektrischen Isolationsschicht (23) abgedeckt sind.

3. Sensor zur Bestimmung des Drucks oder der Kraft mit Hilfe eines auf einem Träger (10) aufgebrachten Dickschichtwiderstands (11), dadurch gekennzeichnet, daß der Träger ein auf dem Ende eines Koaxialkabels (55) aufgesetzter Tropfen (56) aus isolierendem Material ist, daß auf den Tropfen (56) der Dickschichtwiderstand (11) aufgedruckt ist, daß die Enden des Dickschichtwiderstandes mit dem äußeren Leiter (57) des Koaxialkabels (55) verbunden sind und daß der innere Leiter (58) des Koaxialkabels (55) etwa mittig mit dem Dickschichtwiderstand (11) verbunden sind.

4. Sensor nach Anspruch 3, dadurch gekennzeichnet, daß der Dickschichtwiderstand (11) mit einer Schutzschicht (60) überdeckt ist, die mindestens bis zur äußeren elektrischen Isolationsschicht (61) des Koaxialkabels (55) reicht.

## Claims

1. Sensor for determining the pressure or the force with the aid of a thick-film resistor (11) applied to a carrier (10), characterised in that the carrier (10) and at least one force-introducing part (13), which rests against the thick-film resistor and transfers the force or the pressure to be determined to the latter, consists of electrically conductive material, in that the leads (18, 19) used for leading away the measurement signal are the conductors of a coaxial cable (17), in that the outer conductor (18) of the coaxial cable (17) is arranged at the carrier (10) and in that the inner conductor (19) of the coaxial cable (17) is arranged at the force-introducing part (13).

2. Sensor according to Claim 1, characterised in that the carrier (10) and the force-introducing part (13) are covered by an electrical insulation layer (23).

3. Sensor for determining the pressure or the force with the aid of a thick-film resistor (11) applied to a carrier (10), characterised in that the carrier is a pearl (56) of insulating material placed onto the end of a coaxial cable (55), in that the thick-film resistor (11) is printed onto the pearl (56), and in that the ends of the thick-film resistor are connected to the outer conductor (57) of the coaxial cable (55) and in that the inner conductor (58) of the coaxial cable (55) are (sic) connected approximately centrally to the thick-film resistor (11).

4. Sensor according to Claim 3, characterised in that the thick-film resistor (11) is covered with a protective layer (60) which extends at least to the outer electrical insulation layer (61) of the coaxial cable (55).

## Revendications

1. Détecteur (palpeur) pour la détermination d'une pression ou d'une force à l'aide d'une résistance à couche épaisse (11) rapportée sur un support (10), détecteur caractérisé en ce que le support (10) et au moins une pièce d'introduction de la force (13) s'appliquant sur la résistance à couche épaisse et lui transmettant la force ou bien la pression à déterminer, sont constitués d'un matériau électriquement conducteur, en ce que les liaisons (18, 19) servant à dériver le signal de mesure sont les conducteurs d'un câble co-axial (17), en ce que le conducteur externe (18) du câble co-axial (17) est disposé sur le support (10), tandis que le conducteur interne (19) du câble co-axial est disposé sur la pièce d'introduction de la force (13).

2. Détecteur selon la revendication 1, caractérisé en ce que le support (10) et la pièce d'introduction de la force (13) sont recouverts par une couche électriquement isolante (23).

3. Détecteur pour la détermination d'une pression ou d'une force à l'aide d'une résistance à couche épaisse (11) rapportée sur un support (10), détecteur caractérisé en ce que le support est une goutte (56) en un matériau isolant placé sur l'extrémité d'un câble co-axial (55), en ce que la résistance à couche épaisse (11) est imprimée sur la goutte (56), en ce que les extrémités de la résistance à couche épaisse sont reliées au conducteur externe (57) du câble co-axial (55) et en ce que le conducteur interne (58) du câble co-axial (55) est relié à la résistance à couche épaisse (11) à peu près au milieu de celle-ci.

4. Détecteur selon la revendication 3, caractérisé en ce que la résistance à couche épaisse (11) est recouverte d'une couche de protection (60) qui s'étend au moins jusqu'à la couche électriquement isolante externe (61) du câble co-axial (55).

FIG. 1

FIG. 2

FIG. 3

FIG. 4

FIG. 5